# EUROPÄISCHE PATENTANMELDUNG

(11) **EP 3 680 605 A1**
(43) Veröffentlichungstag der Anmeldung: **15.07.2020**
(21) Anmeldenummer: 20151333.0
(22) Anmeldetag: 12.01.2020
(51) Int. Cl.: G01B 11/04, G06T 7/00, G01B 11/26

(54) **VERFAHREN ZUR ÜBERPRÜFUNG WENIGSTENS EINER SCHNITTKANTE WENIGSTENS EINER WERKSTOFFPLATTE, KANTEN-ÜBERPRÜFUNGSVORRICHTUNG UND ANLAGE ZUM ABLÄNGEN EINES ENDLOS-PLATTENSTRANGS**

(30) Priorität: 11.01.2019 DE 102019100661
(71) Anmelder: DIEFFENBACHER GMBH MASCHINEN- UND ANLAGENBAU, 75031 Eppingen (DE)
(72) Erfinder: SOLAWA, Thilo, 75031 Eppingen (DE); ZIPF, Stefan, 75031 Eppingen (DE); WILMSEN, Ulrich, 75031 Eppingen (DE)
(74) Vertreter: Hartdegen, Helmut

(57) **Zusammenfassung**

Es werden ein Verfahren zur Überprüfung wenigstens einer Schnittkante (38, 50) wenigstens einer Werkstoffplatte (14), welche mit einer Fördereinrichtung (20) in einer Förderrichtung (24) befördert wird, eine Kanten-Überprüfungsvorrichtung (18) und eine Anlage (10) zum Ablängen eines Endlos-Plattenstrangs (12) zu Werkstoffplatten (14) beschrieben. Bei dem Verfahren wird mit wenigstens einer Kanten-Überprüfungsvorrichtung (18) die wenigstens eine Schnittkante (38, 50) optisch abgetastet. Aus der optischen Abtastung werden Zustandsinformationen (46, 48) über den räumlichen Zustand der Werkstoffplatte (14) gewonnen. Aus der optischen Abtastung wird eine Orientierung (46, 48) der wenigstens einen Schnittkante (38, 50) relativ zu wenigstens einer Bezugslinie (40, 42) ermittelt. Falls die Orientierung (46, 48) der wenigstens einen Schnittkante (38, 50) relativ zu der wenigstens einen Bezugslinie (40, 42) von einer Soll-Orientierung abweicht, wird wenigstens eine Fehlermeldung erzeugt.

## Beschreibung

### Technisches Gebiet

Die Erfindung betrifft ein Verfahren zur Überprüfung wenigstens einer Schnittkante wenigstens einer Werkstoffplatte, welche mit einer Fördereinrichtung in einer Förderrichtung befördert wird, wobei bei dem Verfahren mit wenigstens einer Kanten-Überprüfungsvorrichtung die wenigstens eine Schnittkante optisch abgetastet wird und aus der optischen Abtastung Zustandsinformationen über den räumlichen Zustand der Werkstoffplatte gewonnen werden.

Ferner betrifft die Erfindung eine Kanten-Überprüfungsvorrichtung zur Überprüfung wenigstens einer Schnittkante wenigstens einer Werkstoffplatte, welche mit einer Fördereinrichtung in einer Förderrichtung durch einen Überprüfungsbereich der Kanten-Überprüfungsvorrichtung befördert wird, wobei die Kanten-Überprüfungsvorrichtung wenigstens eine optische Detektionseinrichtung zum optischen Abtasten wenigstens einer Schnittkante und wenigstens eine Auswerteeinrichtung zur Ermittlung von Zustandsinformationen über den räumlichen Zustand der Werkstoffplatte aus der optischen Abtastung aufweist.

Außerdem betrifft die Erfindung eine Anlage zum Ablängen eines Endlos-Plattenstrangs zu Werkstoffplatten,
- mit wenigstens einer Trenneinrichtung, zum Abtrennen von Werkstoffplatten von dem Endlos-Plattenstrang entlang wenigstens einer Schnittkante,
- mit wenigstens einer Fördereinrichtung zum Fördern der wenigstens einen Werkstoffplatte in einer Förderrichtung und
- mit wenigstens einer Kanten-Überprüfungsvorrichtung zur Überprüfung wenigstens einer Schnittkante wenigstens einer Werkstoffplatte, welche in einer Förderrichtung mit einer Fördereinrichtung durch einen Überprüfungsbereich der wenigstens einen Kanten-Überprüfungsvorrichtung befördert wird, wobei die wenigstens eine Kanten-Überprüfungsvorrichtung wenigstens eine optische Detektionseinrichtung zum optischen Abtasten wenigstens einer Schnittkante und wenigstens eine Auswerteeinrichtung zur Ermittlung von Zustandsinformationen über den räumlichen Zustand der Werkstoffplatte aus der optischen Abtastung aufweist.

### Stand der Technik

Aus der DE 10 2016 001 995 A1 ist ein Verfahren zum Beschneiden und Vermessen einer Platte mit folgenden Schritten bekannt: Trennen eines flachen und gepressten Werkstoffs mithilfe wenigstens einer Schneideeinrichtung, Transport der entstandenen Platte zu einer Vermessungsstation, wobei die Vermessungsstation ein Kamera-Plattenmesssystem mit Messkamera umfasst, optische Abtastung der Plattenecken und Weitergabe von gemessenen Raumdaten an eine rechnergestützte Auswerte- und Steuerungseinheit, Ermittlung und Berechnung der genauen Kantenlängen und Winkel zweier benachbarter Kanten, und Berechnung der Stelldaten zum Ansteuern einer Stelleinrichtung zur Ausrichtung der Schneideeinrichtung.

Der Erfindung liegt die Aufgabe zugrunde, ein Verfahren, eine Kanten-Überprüfungsvorrichtung und eine Anlage der eingangs genannten Art zu gestalten, bei der der Verlauf wenigstens einer Schnittkante, insbesondere ihre Richtung bezüglich benachbarter Kanten und/oder ihre Richtung bezüglich der Förderrichtung, einfacher und/oder genauer ermittelt werden kann.

### Offenbarung der Erfindung

Diese Aufgabe wird erfindungsgemäß bei dem Verfahren dadurch gelöst, dass aus der optischen Abtastung eine Orientierung der wenigstens einen Schnittkante relativ zu wenigstens einer Bezugslinie ermittelt wird und, falls die Orientierung der wenigstens einen Schnittkante relativ zu der wenigstens einen Bezugslinie von einer Soll-Orientierung abweicht, wenigstens eine Fehlermeldung erzeugt wird.

Erfindungsgemäß wird die wenigstens eine Schnittkante bezüglich ihrer Orientierung mit einer entsprechenden Bezugslinie verglichen. Die wenigstens eine Bezugslinie gibt eine Sollrichtung an, an der die wenigstens eine Schnittkante im fehlerfreien Zustand ausgerichtet sein soll. Die Orientierung bezüglich einer Bezugslinie kann durch einen Winkel charakterisiert werden.

Die Erfindung ermöglicht, dass die Ausrichtung und/oder die Rechtwinkligkeit der geschnittenen Werkstoffplatten während der insbesondere kontinuierlichen Förderung durch eine Anlage zur Herstellung der Werkstoffplatten überwacht werden. Die ermittelten Zustandsinformationen über den räumlichen Zustand einer Werkstoffplatte können mit entsprechenden Soll-Zuständen verglichen werden. Im Falle einer Abweichung kann die Anlage zur Herstellung der Werkstoffplatten, insbesondere eine der wenigstens einen Kanten-Überprüfungsvorrichtung funktional vorgeschaltete Trennvorrichtung, entsprechend angesteuert werden. So kann mit der Überprüfung wenigstens einer Schnittkante der wenigstens einen Werkstoffplatte und der entsprechende Steuerung der Anlage die Qualität der nachfolgenden Werkstoffplatten verbessert und Ausschuss vermieden werden.

Zustandsinformationen über den räumlichen Zustand einer Werkstoffplatte im Sinne der Erfindung sind insbesondere Winkel zwischen Kanten der Werkstoffplatte, Längen von Kanten und eine Orientierung der Werkstoffplatte, insbesondere der Schnittkante, relativ zur Förderrichtung.

Vorteilhafterweise kann die wenigstens eine Werkstoffplatte aus einem Endlos-Plattenstrang abgelängt werden. Die wenigstens eine Werkstoffplatte kann aus dem Endlos-Plattenstrang mittels einer Trennvorrichtung, insbesondere eine Schneidvorrichtung, getrennt, insbesondere geschnitten, werden. Die Trennvorrichtung kann funktional der Vermessungsvorrichtung vorgelagert sein. Die Trennvorrichtung kann vorteilhafterweise eine Mehrfach-Diagonalsäge aufweisen. Mit einer Mehrfach-Diagonalsäge können Werkstoffplatten mit einer gewünschten Plattenlänge aus dem Endlos-Plattenstrang geschnitten, also abgelängt, werden.

Vorteilhafterweise kann die Orientierung innerhalb einer vorgegebenen Toleranz überprüft werden. Auf diese Weise können gegebenenfalls herstellungsbedingte und/oder der Überprüfungsmethoden geschuldete Toleranzen berücksichtigt werden.

Vorteilhafterweise kann die Trennvorrichtung auf Basis der Ergebnisse der Überprüfung gesteuert und/oder geregelt werden.

Die Werkstoffplatten können aus Holz und/oder anderen nachwachsenden Agrarprodukten wie Span-, Faser-, Stroh-, und Schnitzelplatten, sowie Kunststoffplatten, sein.

Vorteilhafterweise können die Werkstoffplatten als Pressplatten realisiert sein. Der Endlos-Plattenstrang kann vorteilhafterweise mittels einer insbesondere kontinuierlich arbeitenden Presse aus Streugut gepresst werden.

Als Streugut können Partikel, insbesondere Späne, Schnitzel oder Fasern oder dergleichen, aus Holz und/oder anderen nachwachsenden Agrarprodukten und/oder Kunststoff dienen. Das Streugut kann mit Bindemitteln oder Klebemittel versehen sein.

Bei einer vorteilhaften Ausgestaltung des Verfahrens kann die Orientierung der wenigstens einen Schnittkante relativ zu wenigstens einer anderen Kante der wenigstens eine Werkstoffplatte ermittelt werden, welche auf die wenigstens eine Schnittkante stößt, und falls die Orientierung der wenigstens einen Schnittkante gegenüber der anderen Kante von einem vorgegebenen Winkel abweicht, kann eine Fehlermeldung über einen Fehler bei wenigstens einer Trenneinrichtung, mit der die wenigstens eine Werkstoffplatte von einem Endlos-Plattenstrang abgetrennt wurde, erzeugt werden. Auf diese Weise kann überprüft werden, ob die Abtrennung der Werkstoffplatte von dem Endlos-Plattenstrang entsprechend einer Vorgabe erfolgt ist. Falls die Abtrennung nicht unter dem korrekten Winkel erfolgt ist, wird eine entsprechende Fehlermeldung ausgegeben.

Vorteilhafterweise kann die Orientierung der wenigstens eine Schnittkante relativ zu eines Seitenkante der Werkstoffplatte ermittelt werden. Auf diese Weise können die Orientierungen einer in Förderrichtung vorderen Schnittkante und einer hinteren Schnittkante direkt mit der Orientierung der Seitenkante verglichen werden. Die Orientierung der Seitenkante ist durch den Verlauf des Endlos-Plattenstrangs vorgegeben.

Vorteilhafterweise kann der vorgegebene Winkel 90° sein. Auf diese Weise kann mit dem Verfahren die Rechtwinkligkeit der Werkstoffplatte überprüft werden.

Bei einer weiteren vorteilhaften Ausgestaltung des Verfahrens kann die Orientierung der wenigstens einen Schnittkante relativ zu wenigstens einer vorgegebenen Förder-Bezugslinie ermittelt werden. Auf diese Weise kann eine Schrägstellung der wenigstens eine Werkstoffplatte bezüglich der Förderrichtung erkannt werden. Falls die Werkstoffplatte in schräger Ausrichtung befördert wird, kann dies an eine Abweichung der Orientierung der wenigstens einen Schnittkante bezüglich der Förder-Bezugslinie erkannt werden. Die Förder-Bezugslinie gibt die entsprechende Solllinie an, an der die wenigstens eine Schnittkante orientiert wird.

Die Förder-Bezugslinie kann vorteilhafterweise parallel zur Förderrichtung verlaufen. Sofern die Werkstoffplatten rechtwinklig geschnitten sind, kann geprüft werden, ob die wenigstens eine Schnittkante einen rechten Winkel zu der Förder-Bezugslinie einhält.

Bei einer weiteren vorteilhaften Ausgestaltung des Verfahrens kann die wenigstens eine Förder-Bezugslinie mittels Kalibrierung ermittelt werden. Auf diese Weise kann die Förder-Bezugslinie vorab insbesondere vor der ersten Inbetriebnahme bestimmt werden.

Bei einer weiteren vorteilhaften Ausgestaltung des Verfahrens kann bei der Kalibrierung wenigstens eine Norm-Werkstoffplatte in definierte Orientierung in Förderrichtung befördert werden und die Förder-Bezugslinie kann aus dem Verlauf wenigstens einer Kante der wenigstens einen Norm-Werkstoffplatte ermittelt werden. Auf diese Weise kann einfach insbesondere für die gewünschte Form der Werkstoffplatte eine individuelle Förder-Bezugslinie ermittelt werden.

Vorteilhafterweise kann die Förder-Bezugslinie aus dem Verlauf wenigstens einer Seitenkante der wenigstens einen Norm-Werkstoffplatte ermittelt werden. Bei rechtwinkligen Werkstoffplatten verlaufen die Seitenkante in der Soll-Orientierung parallel zur Förderrichtung. So kann eine Abweichung von einer Soll-Orientierung der Werkstoffplatte bezogen auf die Förderrichtung ermittelt werden.

Eine Norm-Werkstoffplatte ist eine Werkstoffplatte mit vorgegebenen Abmessungen und Winkeln.

Bei einer weiteren vorteilhaften Ausgestaltung des Verfahrens kann wenigstens eine in Förderrichtung betrachtet vordere Schnittkante und/oder wenigstens eine in Förderrichtung betrachtet hintere Schnittkante optisch abgetastet werden. Das Abtasten einer vorderen Schnittkante hat den Vorteil, dass bereits bei der ersten Werkstoffplatte, welche von einem Endlos-Plattenstrang abgetrennt wird, die Orientierung und/oder Rechtwinkligkeit überprüft werden kann. So können erkannte Fehler bei den nachfolgenden Werkstoffplatten vermieden werden.

Das Abtasten wenigstens einer hinteren Schnittkante hat den Vorteil, dass auch die letzte Werkstoffplatte einer Reihe abgetrennter Werkstoffplatten bezüglich ihrer Rechtwinkligkeit überprüft werden kann.

Wenn sowohl die vordere als auch die hintere Schnittkante optisch abgetastet wird, kann eine Redundanz realisiert werden. Die Zuverlässigkeit der Kanten-Überprüfungsvorrichtung kann so erhöht werden.

Bei einer weiteren vorteilhaften Ausgestaltung des Verfahrens kann als Reaktion auf die wenigstens eine Fehlermeldung wenigstens eine entsprechende Einstellung der Fördereinrichtung und/oder wenigstens eine entsprechende Einstellung wenigstens einer Trenneinrichtung, welche zum Trennen der Werkstoffplatte von einem Endlos-Plattenstrang der wenigstes einen Kanten-Überprüfungsvorrichtung vorgeordnet ist, automatisch angepasst werden und/oder als Reaktion auf die wenigstens eine Fehlermeldung kann wenigstens ein optischer und/oder akustischer Warnhinweis ausgegeben werden und/oder als Reaktion auf die wenigstens eine Fehlermeldung kann die Fördereinrichtung und/oder die wenigstens eine Trenneinrichtung gestoppt werden. Mit der automatischen Anpassung der Einstellung der Fördereinrichtung und/oder wenigstens einer Trenneinrichtung kann die Korrektur erfolgen, ohne dass die Anlage gestoppt werden muss.

Alternativ oder zusätzlich kann auf die wenigstens eine Fehlermeldung wenigstens ein optischer und/oder akustischer Warnhinweis ausgegeben werden. Auf diese Weise kann Bedienpersonal auf den Fehler hingewiesen werden, so das entsprechende Maßnahmen getroffen werden können.

Alternativ oder zusätzlich kann auf die wenigstens eine Fehlermeldung die Fördereinrichtung und/oder die wenigstens eine Trenneinrichtung gestoppt werden. Auf diese Weise kann verhindert werden, dass fehlerhaft geschnittene und/oder schräg bezüglich der Förderrichtung angeordnete Werkstoffplatten weiter transportiert und gegebenenfalls mit falscher Ausrichtung folgenden Einrichtungen zur weiteren Verarbeitung zugeführt werden.

Bei einer weiteren vorteilhaften Ausgestaltung des Verfahrens kann die Orientierung der wenigstens einen Schnittkante relativ zu wenigstens einer Bezugslinie mittels wenigstens eines Mustervergleichs und/oder mittels wenigstens einer Vermessung ermittelt werden.

Bei dem Mustervergleich kann schnell ein Muster, welches durch den Verlauf der wenigstens einen Schnittkante relativ zum Verlauf einer auf sie treffenden Kante, insbesondere einer Seitenkante, charakterisiert wird, mit einem Referenzmuster verglichen werden und daraus eine Abweichung des Ist-Verlaufs der wenigstens einen Schnittkante zu einem Soll-Verlauf ermittelt werden. Das Referenzmuster kann zuvor, insbesondere bei einer Inbetriebnahme der Anlage, mithilfe einer Norm-Werkstoffplatte vorgegeben werden.

Alternativ oder zusätzlich kann die Orientierung der wenigstens einen Schnittkante relativ zur wenigstens einen Bezugslinie mittels wenigstens einer Vermessung ermittelt werden. Auf diese Weise können zusätzlich Angaben über Länge, Breite und/oder Winkel der Werkstoffplatte ermittelt werden. So können entsprechende Korrekturmaßnahmen genauer gesteuert werden.

Bei einer weiteren vorteilhaften Ausgestaltung des Verfahrens kann die Orientierung der wenigstens eine Schnittkante relativ zu wenigstens einer Bezugslinie mittels wenigstens eines ortsaufgelösten Empfängers und/oder mittels wenigstens einer Lichtschranke ermittelt werden. Mithilfe von ortsausgelösten Empfängern können Mustervergleiche schneller vorgenommen werden. Ortsaufgelöste Empfänger haben den Vorteil, dass mehrere Stellen der wenigstens einen Schnittkante und/oder benachbarter Kanten, insbesondere Seitenkanten, erfasst werden können.

Vorteilhafterweise können als ortsaufgelöste Empfänger wenigstens ein CCD-Chip, mehrere Fotodioden oder dergleichen eingesetzt werden. CCD-Chips haben den Vorteil, dass sie einfacher kalibriert werden können als Einzelempfänger.

Mit Lichtschranken können insbesondere über Laufzeitmessungen Längen und/oder Winkel ermittelt werden.

Vorteilhafterweise kann wenigstens ein Empfänger der Kanten-Überprüfungsvorrichtung räumlich oberhalb eines Förderweges, insbesondere einer Förderbahn, der Fördereinrichtung angeordnet sein. Auf diese Weise kann die Werkstoffplatte von oben optisch abgetastet werden, ohne dass Teile der Fördereinrichtung im Weg sind. Der Bereich auf den wenigen seine Empfänger gerichtet ist, ist Überwachungsbereich der Kanten-Überprüfungsvorrichtung.

Ferner wird die Aufgabe erfindungsgemäß bei der Kanten-Überprüfungsvorrichtung dadurch gelöst, dass die die wenigstens eine Auswerteeinrichtung Mittel aufweist zur Ermittlung einer Orientierung der wenigstens einen Schnittkante relativ zu wenigstens einer Bezugslinie aus der optischen Abtastung und zur Überprüfung, ob die Orientierung der wenigstens einen Schnittkante relativ zu der wenigstens einen Bezugslinie von einer Soll-Orientierung abweicht und zur Erzeugung wenigstens einer Fehlermeldung, falls dies der Fall ist.

Vorteilhafterweise kann die wenigstens eine Auswerteeinrichtung auf softwaremäßigem und/oder hardwaremäßigem Wege realisiert sein. Auf diese Weise kann die Auswerteeinrichtung mit einer Steuer- und Auswerteeinrichtung eine Anlage zum Ablängen von Werkstoffplatten kombiniert werden.

Bei einer vorteilhaften Ausgestaltung kann die wenigstens eine optische Detektionsvorrichtung wenigstens einen ortsaufgelösten Empfänger und/oder wenigstens eine Lichtschranke aufweisen.

Mithilfe von ortsausgelösten Empfängern können Mustervergleiche vorgenommen werden. Ortsaufgelöste Empfänger haben den Vorteil, dass mehrere Stellen der wenigstens einen Schnittkante und/oder benachbarter Kanten, insbesondere Seitenkanten, ermittelt werden können.

Vorteilhafterweise können als ortsaufgelöste Empfänger wenigstens ein CCD-Chip, mehrere Fotodioden oder dergleichen eingesetzt werden. CCD-Chips haben den Vorteil, dass sie einfacher kalibriert werden können als Einzelempfänger.

Mit Lichtschranken können insbesondere über Laufzeitmessungen Längen und/oder Winkel ermittelt werden.

Außerdem wird die Erfindung bei der Anlage erfindungsgemäß dadurch gelöst, dass die die wenigstens eine Auswerteeinrichtung Mittel aufweist zur Ermittlung einer Orientierung der wenigstens einen Schnittkante relativ zu wenigstens einer Bezugslinie aus der optischen Abtastung und zur Überprüfung, ob die Orientierung der wenigstens einen Schnittkante relativ zu der wenigstens einen Bezugslinie von einer Soll-Orientierung abweicht und zur Erzeugung einer Fehlermeldung, falls dies der Fall ist.

Im Übrigen gelten die im Zusammenhang mit dem erfindungsgemäßen Verfahren, der erfindungsgemäßen Kanten-Überprüfungsvorrichtung und der erfindungsgemäßen Anlage und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Seitenansicht einer Anlage zum Ablängen eines Endlos-Plattenstrangs zu Werkstoffplatten gemäß einem ersten Ausführungsbeispiel in einer bei-spielhaften Betriebssituation, mit einer Fördereinrichtung, zwei Diagonalsä-gen und einer Kanten-Überprüfungsvorrichtung;
- Figur 2: eine Draufsicht auf die Anlage aus der Figur 1 ;
- Figur 3: eine Draufsicht auf die Anlage aus der Figur 1 im Bereich der Kanten-Über-wachungsvorrichtung in einer anderen beispielhaften Betriebssituation, in der eine der Werkstoffplatten schräg auf einer Förderbahn der Förderein-richtung liegt;
- Figur 4: eine Draufsicht auf eine Anlage zum Ablängen eines Endlos-Plattenstrangs zu Werkstoffplatten gemäß einem zweiten Ausführungsbeispiel in einer bei-spielhaften Betriebssituation, wobei die Anlage drei Diagonalsägen auf-weist.

In den Figuren sind gleiche Bauteile mit gleichen Bezugszeichen versehen.

### Ausführungsform(en) der Erfindung

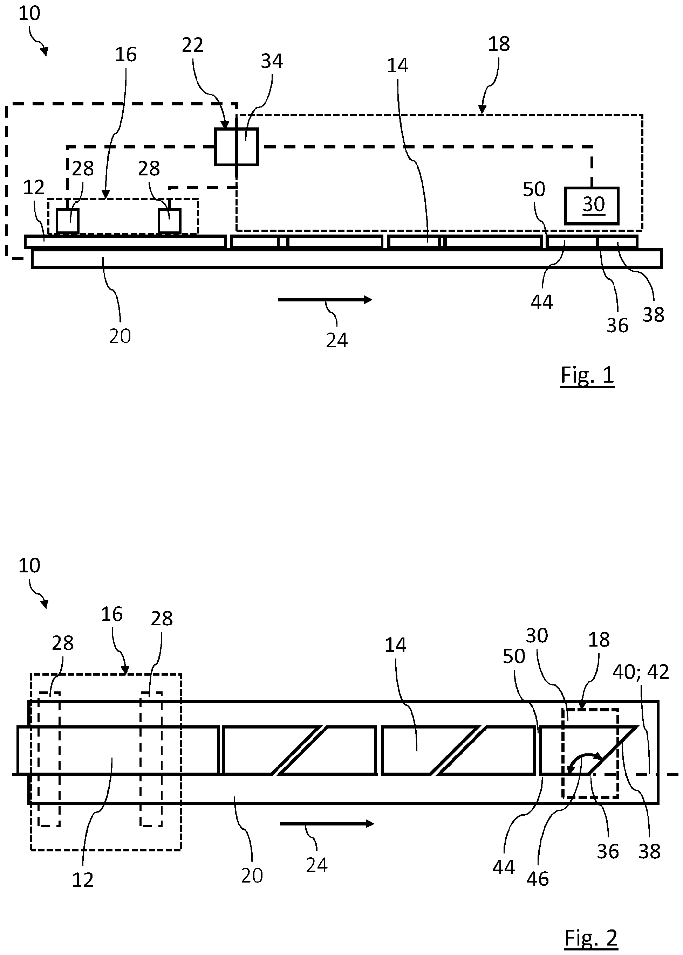

In der Figur 1 ist eine Anlage 10 zum Ablängen eines Endlos-Plattenstrangs 12 zu Werkstoffplatten 14 gemäß einem ersten Ausführungsbeispiel in einer beispielhaften Betriebssituation in einer Seitenansicht gezeigt. Figur 2 zeigt die Anlage 10 in einer Draufsicht.

Die Anlage 10 umfasst beispielhaft eine Trennvorrichtung 16, eine Kanten-Überprüfungsvorrichtung 18 und eine Fördereinrichtung 20. Ferner umfasst die Anlage 10 eine elektronische Steuereinrichtung 22.

Der Endlos-Plattenstrang 12 und damit die Werkstoffplatten 14 sind als Pressplatten realisiert. Die Pressplatten können beispielsweise mittels einer in den Figuren nicht gezeigte kontinuierlich arbeitenden Presse aus Streugut gepresst werden. Eine Streueinrichtung und die Presse können der Anlage 10 vorgeschaltet sein. Beispielsweise kann die Fördereinrichtung 20 von der Presse zur Trennvorrichtung 16 und zur Kanten-Überprüfungsvorrichtung 18 führen. Als Streugut können Partikel, insbesondere Späne, Schnitzel oder Fasern oder dergleichen, aus Holz und/oder anderen nachwachsenden Agrarprodukten und/oder Kunststoff dienen. Das Streugut kann mit Bindemittel oder Klebemittel versehen sein.

Die Fördereinrichtung 20 ist beispielhaft als Förderband realisiert. Mit der Fördereinrichtung 20 wird der zu schneidende Endlos-Plattenstrang 12 beispielhaft kontinuierlich in einer Förderrichtung 24 durch die Anlage 10 befördert. Die Fördereinrichtung 20 ist funktional mit der Steuereinrichtung 22 verbunden. Auf diese Weise kann die Fördereinrichtung 20 mithilfe der Steuereinrichtung 22 gesteuert werden.

Die Trennvorrichtung 16 weist beispielhaft zwei Diagonalsägen 28 auf, mit welchen der Plattenstrang 12 in einzelne Werkstoffplatten 14 geschnitten wird. Bei dem gezeigten Ausführungsbeispiel soll der Endlos-Plattenstrang 12 zu rechtwinkligen Werkstoffplatten 14 geschnitten werden. Die Trennvorrichtung 16 ist steuerbar mit der Steuereinrichtung 22 verbunden. Die Diagonalsägen 28 können mithilfe der Steuereinrichtung 22 einzeln beispielsweise bezüglich des Schnittwinkels eingestellt werden.

In Förderrichtung 24 betrachtet hinter der Trennvorrichtung 16 ist die Kanten-Überprüfungsvorrichtung 18 angeordnet. Die Kanten-Überprüfungsvorrichtung 18 umfasst eine optische Detektionseinrichtung in Form einer Kamera 30, welche oberhalb der Förderbahn der Fördereinrichtung 20 angeordnet ist. Die Kamera 30 ist in einen Überprüfungsbereich der Kanten-Überprüfungsvorrichtung 18 oberhalb der Förderbahn der Fördereinrichtung 20 gerichtet.

Die Kamera 30 umfasst einen ortsaufgelösten Empfänger, beispielsweise mit einem CCD-Chip. Die Kamera 30 ist funktional mit einer elektronischen Auswerteeinrichtung 34 der Kanten-Überprüfungsvorrichtung 18 verbunden. Mit der Kamera 30 gewonnene Informationen, beispielsweise Zustandsinformation über den räumlichen Zustand der Werkstoffplatte 14, können mit der elektronischen Auswerteeinrichtung 34 ausgewertet werden. Zustandsinformationen über den räumlichen Zustand einer Werkstoffplatte 14 im sind Winkel zwischen Kanten der Werkstoffplatte 14, Längen von Kanten und eine Orientierung der Werkstoffplatte 14 relativ zur Förderrichtung 20. Die elektronische Auswerteeinrichtung 34 ist beispielhaft in der Steuereinrichtung 22 auf softwaremäßigem und hardwaremäßigem Wege realisiert.

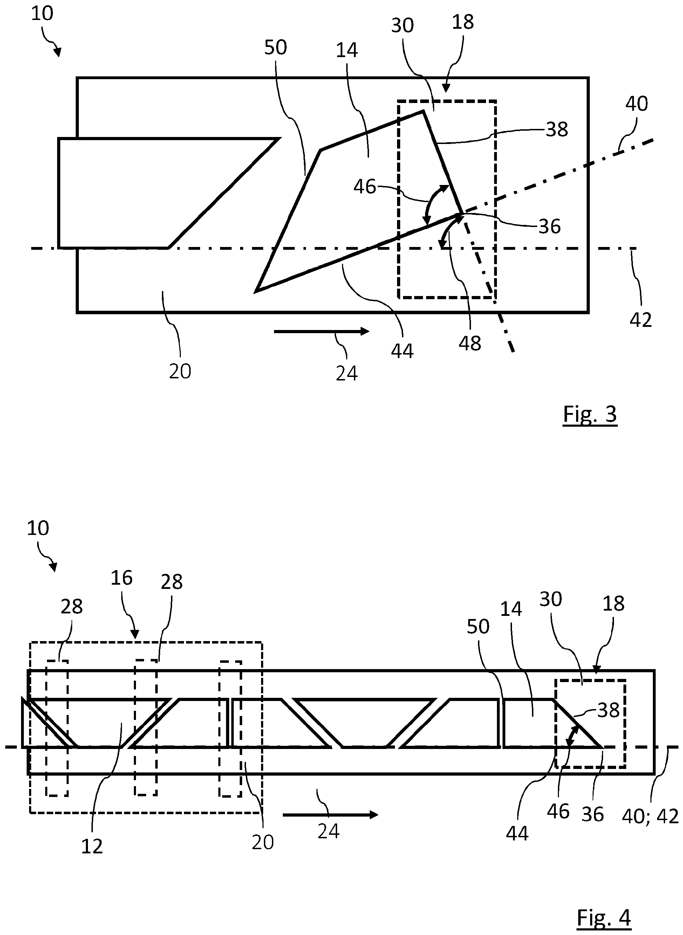

Mit der Kanten-Überprüfungsvorrichtung 18 kann mittels eines im Folgenden näher erläuterten Verfahrens zur Überprüfung wenigstens einer Schnittkante 38 der Werkstoffplatte 14 die Rechtwinkligkeit der Werkstoffplatten 14 an ihren Ecken 36 überprüft werden. Dazu wird beispielhaft die vordere Schnittkante 38 jeder Werkstoffplatte 14 mit der Kamera 30 optisch abgetastet, während die Werkstoffplatte 14 in Überprüfungsbereich Kamera 30 durchläuft. Die Orientierung der vorderen Schnittkante 38 wird relativ zu einer Platten-Bezugslinie 40 und relativ zu einer Förder-Bezugslinie 42 ermittelt. Die Platten-Bezugslinie 40 der im Bereich der Kamera 30 befindlichen ersten Werkstoffplatte 14 und die Förder-Bezugslinie 42 fallen in der Betriebssituation, die in den Figuren 1 und 2 gezeigt ist, zusammen. In der Betriebssituation, die in der Figur 3 gezeigt ist fallen die Platten-Bezugslinie 40 der ersten Werkstoffplatte und die Förder-Bezugslinie 42 nicht zusammen.

Die Platten-Bezugslinie 40 ist beispielhaft durch die rechte Seitenkante 44 der entsprechenden vorderen Werkstoffplatte 14 definiert.

Die Förder-Bezugslinie 42 verläuft beispielhaft parallel zur Förderrichtung 24. Die Förder-Bezugslinie 42 kann beispielsweise bei einer Kalibrierung mithilfe einer Norm-Werkstoffplatte ermittelt werden, welche rechtwinklig ist, vorgegebene Maße aufweist und mit ihren Seitenkanten parallel zur Förderrichtung ausgerichtet mit der Fördereinrichtung 20 befördert wird. Der Verlauf der Förder-Bezugslinie 42 kann in einem entsprechenden Speichermedium der Auswerteeinrichtung 34 gespeichert werden und steht so für eine spätere Mustererkennung zur Verfügung.

Zur Überprüfung der Rechtwinkligkeit einer Werkstoffplatte 14 wird die Orientierung der vorderen Schnittkante 38 bezüglich ihrer Platten-Bezugslinie 40 ermittelt. Entspricht ein Eckenwinkel 46 zwischen der vorderen Schnittkante 38 und der Platten-Bezugslinie 40 nicht 90°, so wird mit der Auswerteeinrichtung 34 eine Fehlermeldung über einen Fehler bei der Trennvorrichtung 16 erzeugt.

Die die Orientierung der vorderen Schnittkante 38 gegenüber der Platten-Bezugslinie 40 kann dabei mithilfe einer Mustererkennung ermittelt werden. Dabei wird das Muster eines Linienverlaufs der vorderen Schnittkante 38 und der Seitenkante 40 mit einem rechtwinkligen Referenz-Linienverlauf verglichen. Der Referenz-Linienverlauf ist beispielsweise in der Auswerteeinrichtung 34 gespeichert.

In der in den Figuren 1 und 2 gezeigten Betriebssituation ist eine der Diagonalsägen 28 richtig eingestellt und erzeugt einen rechtwinkligen Schnitt, die andere, beispielsweise die in Förderrichtung 20 vordere Diagonalsäge 18 ist falsch eingestellt und erzeugt einen schrägen Schnitt. Entsprechend verläuft die vordere Schnittkante 38 der vorderen Werkstoffplatte 40 schräg zur rechten Seitenkante. Mithilfe des Verfahrens wird die Abweichung von Rechtwinkligkeit erkannt und eine Fehlermeldung erzeugt. Als Reaktion auf die Fehlermeldung wird mit der Steuereinrichtung 22 die Einstellung der entsprechende Diagonalsäge 28 korrigiert, so dass sie im Folgenden einen rechtwinkligen Schnitt erzeugt.

Um die Ausrichtung der Werkstoffplatten 14 auf der Förderbahn der Fördereinrichtung 20 bezüglich der Förderrichtung 24 zu überprüfen, wird die Orientierung der vorderen Schnittkante 38 der zu überprüfenden Werkstoffplatte 14 mit der Förder-Bezugslinie 42 verglichen.

In der Figur 3 ist eine Betriebssituation gezeigt, in der die in Förderrichtung 24 vordere Werkstoffplatte 14 schräg bezüglich der Förderrichtung 24 auf der Förderbahn der Fördereinrichtung 20 liegt.

Mit dem Verfahren wird überprüft, ob ein Ausrichtungswinkel 48 zwischen der vorderen Schnittkante 38 und der Förder-Bezugslinie 42 ein rechter Winkel ist. Falls der Ausrichtungswinkel 48 von 90° abweicht, wird - nach positiv verlaufener Überprüfung der Rechtwinkligkeit der entsprechenden Werkstoffplatte 14 - erkannt, dass die Werkstoffplatte 14 schräg auf der Fördereinrichtung 20 liegt. Daraufhin wird eine entsprechende Fehlermeldung erzeugt.

Mit der Auswerteeinrichtung 34 wird daraufhin ein optisches und/oder ein akustisches Signal herausgegeben werden, sodass das Bedienpersonal über den Fehler informiert wird. Außerdem kann die Anlage 10, im Besonderen die Fördereinrichtung 20 und die Trennvorrichtung 16 gestoppt werden, sodass der Fehler behoben werden, indem beispielsweise die schräg liegende Werkstoffplatte 14 gerade ausgerichtet wird.

Die Überprüfung der Rechtwinkligkeit und der Ausrichtung der Werkstoffplatten 14 wird bei dem beschriebenen Ausführungsbeispiel lediglich an der vorderen Schnittkante 38 durchgeführt, da der Verlauf einer hinteren Schnittkante 50 einer Werkstoffplatte 14 dem Verlauf der vorderen Schnittkante 38 einer nachfolgenden Werkstoffplatte 14 entspricht. Alternativ kann sowohl der Verlauf der vorderen Schnittkante 38 als auch der Verlauf der hinteren Schnittkante 50 jeder Werkstoffplatte 14 überprüft werden. Auf diese Weise kann eine Redundanz erzeugt werden, sodass die Anlage 10 insgesamt noch zuverlässiger betrieben werden kann.

In der Figur 4 ist eine Anlage 10 gemäß einem zweiten Ausführungsbeispiel in einer beispielhaften Betriebssituation in der Draufsicht gezeigt. Diejenigen Elemente, die zu denen des ersten Ausführungsbeispiels aus den Figuren 1 bis 3 ähnlich sind, sind mit denselben Bezugszeichen versehen. Das zweite Ausführungsbeispiel unterscheidet sich von dem ersten Ausführungsbeispiel dadurch, dass die Trennvorrichtung 16 drei Diagonalsägen 28 aufweist. Bei der in der Figur 4 gezeigten Betriebssituation verläuft der Schnitt der ersten Diagonalsäge 28 korrekt. Die Schnitte der zweiten und der dritten Diagonalsäge 28 verlaufen schräg und müssen daher korrigiert werden.

### Bezugszeichenliste

- 10: Anlage
- 12: Endlos-Plattenstrang
- 14: Werkstoffplatten
- 16: Trennvorrichtung
- 18: Kanten-Überprüfungsvorrichtung
- 20: Fördereinrichtung
- 22: Steuereinrichtung
- 24: Förderrichtung
- 28: Diagonalsägen
- 30: Kamera
- 34: Auswerteeinrichtung der Kanten-Überprüfungsvorrichtung
- 36: Ecken
- 38: Vordere Schnittkante
- 40: Platten-Bezugslinie
- 42: Förder-Bezugslinie
- 44: Rechte Seitenkante
- 46: Eckenwinkel
- 48: Ausrichtungswinkel
- 50: Hintere Schnittkante

## Patentansprüche

1. Verfahren zur Überprüfung wenigstens einer Schnittkante (38, 50) wenigstens einer Werkstoffplatte (14), welche mit einer Fördereinrichtung (20) in einer Förderrichtung (24) befördert wird, wobei bei dem Verfahren mit wenigstens einer Kanten-Überprüfungsvorrichtung (18) die wenigstens eine Schnittkante (38, 50) optisch abgetastet wird und aus der optischen Abtastung Zustandsinformationen (46, 48) über den räumlichen Zustand der Werkstoffplatte (14) gewonnen werden, **dadurch gekennzeichnet, dass** aus der optischen Abtastung eine Orientierung (46, 48) der wenigstens einen Schnittkante (38, 50) relativ zu wenigstens einer Bezugslinie (40, 42) ermittelt wird und, falls die Orientierung (46, 48) der wenigstens einen Schnittkante (38, 50) relativ zu der wenigstens einen Bezugslinie (40, 42) von einer Soll-Orientierung abweicht, wenigstens eine Fehlermeldung erzeugt wird.

2. Verfahren nach Anspruch 1, **dadurch gekennzeichnet, dass** die Orientierung (46) der wenigstens einen Schnittkante (38, 50) relativ zu wenigstens einer anderen Kante (44) der wenigstens eine Werkstoffplatte (14) ermittelt wird, welche auf die wenigstens eine Schnittkante (38, 50) stößt, und falls die Orientierung (46) der wenigstens einen Schnittkante (38, 50) gegenüber der anderen Kante (44) von einem vorgegebenen Winkel abweicht, wird eine Fehlermeldung über einen Fehler bei wenigstens einer Trenneinrichtung (16), mit der die wenigstens eine Werkstoffplatte (14) von einem Endlos-Plattenstrang (12) abgetrennt wurde, erzeugt.

3. Verfahren nach Anspruch 1 oder 2, **dadurch gekennzeichnet, dass** die Orientierung (48) der wenigstens einen Schnittkante (38, 50) relativ zu wenigstens einer vorgegebenen Förder-Bezugslinie (42) ermittelt wird.

4. Verfahren nach Anspruch 3, **dadurch gekennzeichnet, dass** die wenigstens eine Förder-Bezugslinie (42) mittels Kalibrierung ermittelt wird.

5. Verfahren nach Anspruch 4, **dadurch gekennzeichnet, dass** bei der Kalibrierung wenigstens eine Norm-Werkstoffplatte in definierte Orientierung (48) in Förderrichtung (24) befördert wird und die Förder-Bezugslinie (42) aus dem Verlauf wenigstens einer Kante (44) der wenigstens einen Norm-Werkstoffplatte ermittelt wird.

6. Verfahren nach einem der vorigen Ansprüche, **dadurch gekennzeichnet, dass** wenigstens eine in Förderrichtung (24) betrachtet vordere Schnittkante (38) und/oder wenigstens eine in Förderrichtung (24) betrachtet hintere Schnittkante (50) optisch abgetastet wird.

7. Verfahren nach einem der vorigen Ansprüche, **dadurch gekennzeichnet, dass** als Reaktion auf die wenigstens eine Fehlermeldung wenigstens eine entsprechende Einstellung der Fördereinrichtung (20) und/oder wenigstens eine entsprechende Einstellung wenigstens einer Trenneinrichtung (16), welche zum Trennen der Werkstoffplatte (14) von einem Endlos-Plattenstrang (12) der wenigstes einen Kanten-Überprüfungsvorrichtung (18) vorgeordnet ist, automatisch angepasst wird und/oder als Reaktion auf die wenigstens eine Fehlermeldung wenigstens ein optischer und/oder akustischer Warnhinweis ausgegeben wird und/oder als Reaktion auf die wenigstens eine Fehlermeldung die Fördereinrichtung (20) und/oder die wenigstens eine Trenneinrichtung (16) gestoppt wird.

8. Verfahren nach einem der vorigen Ansprüche, **dadurch gekennzeichnet, dass** die Orientierung (46, 48) der wenigstens einen Schnittkante (38, 50) relativ zu wenigstens einer Bezugslinie (40, 42) mittels wenigstens eines Mustervergleichs und/oder mittels wenigstens einer Vermessung ermittelt wird.

9. Verfahren nach einem der vorigen Ansprüche, **dadurch gekennzeichnet, dass** die Orientierung (46, 48) der wenigstens eine Schnittkante (38, 50) relativ zu wenigstens einer Bezugslinie (40, 42) mittels wenigstens eines ortsaufgelösten Empfängers und/oder mittels wenigstens einer Lichtschranke ermittelt wird.

10. Kanten-Überprüfungsvorrichtung (18) zur Überprüfung wenigstens einer Schnittkante (38, 50) wenigstens einer Werkstoffplatte (14), welche mit einer Fördereinrichtung (20) in einer Förderrichtung (24) durch einen Überprüfungsbereich der Kanten-Überprüfungsvorrichtung (18) befördert wird, wobei die Kanten-Überprüfungsvorrichtung (18) wenigstens eine optische Detektionseinrichtung (30) zum optischen Abtasten wenigstens einer Schnittkante (38, 50) und wenigstens eine Auswerteeinrichtung (34) zur Ermittlung von Zustandsinformationen (46, 48) über den räumlichen Zustand der Werkstoffplatte (14) aus der optischen Abtastung aufweist, **dadurch gekennzeichnet, dass** die die wenigstens eine Auswerteeinrichtung (34) Mittel aufweist zur Ermittlung einer Orientierung (46, 48) der wenigstens einen Schnittkante (38, 50) relativ zu wenigstens einer Bezugslinie (40, 42) aus der optischen Abtastung und zur Überprüfung, ob die Orientierung (46, 48) der wenigstens einen Schnittkante (38, 50) relativ zu der wenigstens einen Bezugslinie (40, 42) von einer Soll-Orientierung abweicht und zur Erzeugung wenigstens einer Fehlermeldung, falls dies der Fall ist.

11. Kanten-Überprüfungsvorrichtung nach Anspruch 10, **dadurch gekennzeichnet, dass** die wenigstens eine optische Detektionsvorrichtung (30) wenigstens einen ortsaufgelösten Empfänger und/oder wenigstens eine Lichtschranke aufweist.

12. Anlage zum Ablängen eines Endlos-Plattenstrangs (12) zu Werkstoffplatten (14),
- mit wenigstens einer Trenneinrichtung (16), zum Abtrennen von Werkstoffplatten (14) von dem Endlos-Plattenstrang (12) entlang wenigstens einer Schnittkante (38, 50),
- mit wenigstens einer Fördereinrichtung (20) zum Fördern der wenigstens einen Werkstoffplatte (14) in einer Förderrichtung (24) und
- mit wenigstens einer Kanten-Überprüfungsvorrichtung (18) zur Überprüfung wenigstens einer Schnittkante (38, 50) wenigstens einer Werkstoffplatte (14), welche in einer Förderrichtung (24) mit einer Fördereinrichtung (20) durch einen Überprüfungsbereich der wenigstens einen Kanten-Überprüfungsvorrichtung (18) befördert wird, wobei die wenigstens eine Kanten-Überprüfungsvorrichtung (18) wenigstens eine optische Detektionseinrichtung (30) zum optischen Abtasten wenigstens einer Schnittkante (38, 50) und wenigstens eine Auswerteeinrichtung (34) zur Ermittlung von Zustandsinformationen (46, 48) über den räumlichen Zustand der Werkstoffplatte (14) aus der optischen Abtastung aufweist, **dadurch gekennzeichnet, dass** die die wenigstens eine Auswerteeinrichtung (34) Mittel aufweist zur Ermittlung einer Orientierung (46, 48) der wenigstens einen Schnittkante (38, 50) relativ zu wenigstens einer Bezugslinie (40, 42) aus der optischen Abtastung und zur Überprüfung, ob die Orientierung (46, 48) der wenigstens einen Schnittkante (38, 50) relativ zu der wenigstens einen Bezugslinie (40, 42) von einer Soll-Orientierung abweicht und zur Erzeugung einer Fehlermeldung, falls dies der Fall ist.
